# EUROPÄISCHE PATENTSCHRIFT

(11) **EP 3 312 445 B1**
(45) Veröffentlichungstag und Bekanntmachung des Hinweises auf die Patenterteilung: **06.11.2024**
(21) Anmeldenummer: 17191542.4
(22) Anmeldetag: 18.09.2017
(51) Int. Cl.: F16D 3/04, F16D 3/06, F16C 3/035, F16D 3/227

(54) **BAUEINHEIT**
CONSTRUCTION UNIT
COMPOSANT

(30) Priorität: 29.09.2016 DE 102016218830
(43) Veröffentlichungstag der Anmeldung: 25.04.2018
(73) Patentinhaber: Aktiebolaget SKF, 415 50 Göteborg (SE)
(72) Erfinder: ZIKA, Thomas, 3350 Haag (AT); Preisinger, Gerwin, 4522 Sierning (AT)
(74) Vertreter: Kuhstrebe, Jochen

(56) Entgegenhaltungen:
- EP-A1- 2 163 775
- JP-A- H04 354 858
- US-A1- 2007 157 754

## Beschreibung

Die Erfindung geht aus von einer Baueinheit nach dem Oberbegriff des Anspruchs 1.

Grundsätzlich sind Welle-Nabe-Verbindungen mit und ohne Passfedern bekannt.

In elektrischen Maschinen kommt es durch Stromdurchgang (speziell in modernen frequenzumrichterbetriebenen Motoren/Generatoren) immer wieder zu Lagerschäden. Elektrisch isolierte Wälzlager können das Problem in der elektrischen Maschine selbst lösen, allerdings verschiebt es sich dadurch häufig auf angetriebene Maschinen (z.B. Getriebe etc.). Um diese Schäden an angetriebenen Maschinen zu verhindern muss man die elektrischen Maschinen von allen anderen Komponenten elektrisch isolieren, hierzu stehen allerdings je nach Anwendungen nur beschränkte Möglichkeiten zur Verfügung. Besonders auf kunststoffbasierende Lösungen haben den Nachteil der geringen Steifigkeit bzw. Lastübertragungsfähigkeit.

Ferner beschreibt die Druckschrift US 2007/0157754 A1 eine Anordung zur Übertragung von Drehmoment bei einer Lenkung. Die Druckschrift EP 2 163 775 A1 beschreibt verschiedene Rollkontaktelemente mit einem speziellen Aufbau. Außerdem offenbart die JP H04 354858 A Gelenke mit einer sehr guten Korrosionsbeständigkeit.

Die Aufgabe der Erfindung besteht insbesondere darin, eine gattungsgemäße Baueinheit mit einer hohen Effizienz bereitzustellen. Die Aufgabe wird erfindungsgemäß durch die Merkmale des Patentanspruchs 1 gelöst, während vorteilhafte Ausgestaltungen und Wei- terbildungen der Erfindung den Unteransprüchen entnommen werden können.

Die Erfindung geht aus von einer Baueinheit mit einem ersten Bauelement, einem zweiten Bauelement und einer Verbindungseinheit, welche dazu vorgesehen ist, bei einem Betriebsvorgang Drehmoment von dem ersten Bauelement auf das zweite Bauelement zu übertragen.

Es wird vorgeschlagen, dass die Verbindungseinheit wenigstens zu 90 Masse-% aus technischer Keramik besteht. Unter "vorgesehen" soll insbesondere speziell ausgelegt und/oder speziell ausgestattet verstanden werden. Mit einer erfindungsgemäßen Ausgestaltung kann eine hohe Effizienz erreicht werden. Insbesondere kann eine zuverlässige elektrische Isolation, speziell im hochfrequenten Bereich, erreicht werden. Insbesondere kann im Vergleich zu einer Isolation der beiden Bauelemente, wel- che auf keramischen Schichten basiert, eine hinreichende Impedanz erzielt werden, sowie eine ausreichende Stabilität und Festigkeit. Im Besonderen kann eine kompakte Bauweise erzielt werden. Ferner kann insbesondere eine hohe Steifigkeit und Lastübertragungsfähgikeit, speziell im Vergleich zu einer Elastomer-Isolation, erreicht werden. Vorzugsweise weist die technische Keramik Si₃N₄, SiAlON, Al₂O₃, ZrO₂ und/oder Mischungen dieser Werkstoffe auf.

Mit Vorteil besteht die Verbindungseinheit vollständig aus Keramik.

Das erste Bauteil ist eine Welle oder eine Nabe oder ein Zahnrad.

Ferner wird vorgeschlagen, dass das zweite Bauelement eine mechanische Kupplungshälfte, eine Welle oder eine Nabe oder ein Zahnrad ist.

Die Verbindungseinheit weist zwei, drei, vier, fünf oder mehr einstückig ausgebildete Bauteile auf.

Mit Vorteil sind die Bauteile baugleich und/oder bestehen vollständig aus Keramik.

Wenigstens eines der Bauteile ist rollenförmig.

Außerdem wird vorgeschlagen, dass wenigstens eines der Bauteile ku- gelförmig oder würfelförmig ist.

Vorzugsweise ist wenigstens eines der Bauteile ein Wälzkörper, welcher zur Verwendung in einem Wälzlager geeignet ist. Dadurch kann eine kostengünstige Bauweise erreicht werden.

Bei geeigneter Ausgestaltung können Kräfte und Momente in axialer und radialer Richtung aufgenommen werden.

Die Verbindungseinheit befestigt das zweite Bauelement formschlüssig in Bezug auf eine Umfangsrichtung und/oder eine Längsrichtung des ersten Bauelements an dem ersten Bauelement. Vorzugsweise ist die Möglichkeit der Aufnahme von Kräften und Momente in axialer und radialer Richtung gegeben.

Weiterhin weist das erste Bauelement wenigstens eine Nut auf, in welche zumindest ein Bauteil der Verbindungseinheit eingreift. Dadurch kann ein Längenausgleich, welcher in Folge von Temperaturveränderungen erfolgt, kompensiert werden.

Vorzugsweise weist sowohl das erste Bauelement wenigstens eine Nut, als auch das zweite Bauelement eine Nut auf, in welche zumindest ein Bauteil der Verbindungseinheit eingreift, und/oder die Möglichkeit der axialen Verschiebbarkeit, beziehungsweise der Aufnahme von Relativbewegungen in Längsrichtung, ist gegeben. Unter "axialen Verschiebbarkeit" soll insbesondere eine axiale Verschiebbarkeit der beiden Bauelemente relativ zu einander verstanden werden.

Mit Vorteil weist sowohl das erste Bauelement als auch das zweite Bauelement wenigstens eine Nut auf, in welche zumindest ein Bauteil der Verbindungseinheit eingreift.

Das erste und das zweite Bauelement sind relativ zueinander in Längsrichtung des ersten Bauelements verschiebbar.

Vorzugsweise ist das erste Bauelement eine Motorwelle oder eine Getriebewelle.

Ferner wird ein Elektrofahrzeug, insbesondere Elektroauto, mit der Baueinheit vorgeschlagen.

Weitere Vorteile ergeben sich aus der folgenden Zeichnungsbeschreibung. In der Zeichnung ist eine Ausführung dargestellt, die das Verständnis der Erfindung erleichtert.

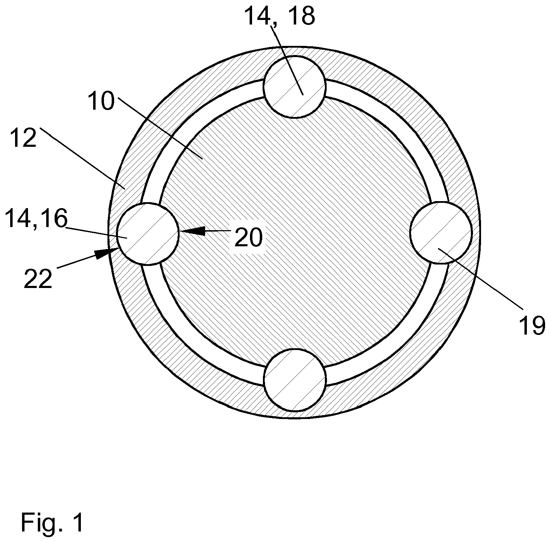

Fig. 1 zeigt schematisch einen Querschnitt durch eine Welle-Nabe-Verbindung, wobei der Schnitt senkrecht zu einer Längsrichtung der Welle ist.

Figur 1 zeigt einen Querschnitt durch eine Baueinheit, die Teil eines Elektroautos sein kann. Die Baueinheit weist ein erstes, als Welle ausgebildetes Bauele- ment 10 und ein zweites Bauelement 12 auf, das eine Nabe ist. Eine Verbindungseinheit 14 der Baueinheit verbindet das erste und das zweite Bauelement.

Die Verbindungseinheit weist ein erstes und ein zweites Bauteil 16, 18 auf. Ferner weist die Verbindungseinheit zwei weitere Bauteile 19 auf. Die vier Bauteile 16, 18, 19 sind alle baugleich und Kugeln, welche als Wälzkörper für ein Kugellager geeignet sein können. Ferner bestehen die vier Bauteile aus technischer Keramik. Vorliegend ist die technische Keramik Siliziumnitrid. Alternativ kann die technische Keramik auch aus SiAlON, Al2O3, ZrO2 und/oder Siliziumnitrid und/oder Mischungen dieser Werkstoffe bestehen.

Die Verbindungseinheit ist dazu vorgesehen, bei einem Drehen des ersten Bauelements 10 um seine Längsachse Drehmoment auf das Bauelement 12 zu übertragen. Dazu befestigt die Verbindungseinheit das zweite Bauelement formschlüssig an dem ersten Bauelement in Bezug auf eine Umfangsrichtung des ersten Bauelements. Die vier Bauteile sind jeweils in einer Nut 20 des ersten Bauelements 10 und in einer Nut 22 des Bauelements 12 angeordnet. Längsrichtungen der Nuten 20 erstrecken sich alle parallel zu einer Längsrichtung des Bauelements 10. Ferner erstrecken sich Längsrichtungen der Nuten 22 alle parallel zu der Längsrichtung des Bauelements 10. Wenn das Bauelement 10 eine beschleunigte Drehbewegung ausführt, üben Nutberandungen der Nuten 20 Kräfte auf die vier Bauteile aus. Die Bauteile üben dann wiederum Kräfte auf Berandungen der Nuten 22 aus, so dass das Bauelement 12 beschleunigt wird.

Die Bauelemente 10, 12 sind metallische Bauteile. Ferner ist das Bauelement 10 eine Motorwelle oder eine Getriebewelle.

Die elektrische Isolation der Bauelemente 10, 12 mittels der Verbindungseinheit weist eine niedrige elektrische Kapazität bzw. hohe Impedanz selbst bei hochfrequenten Strömen auf.

### Bezugszeichenliste

| | |
|---|---|
| 10 | Bauelement |
| 12 | Bauelement |
| 14 | Verbindungseinheit |
| 16 | Bauteil |
| 18 | Bauteil |
| 19 | Bauteil |
| 20 | Nut |

## Patentansprüche

1. Baueinheit mit einem ersten Bauelement (10), einem zweiten Bauelement (12) und einer Verbindungseinheit (14), welche dazu vorgesehen ist, bei einem Betriebsvorgang Drehmoment von dem ersten Bauelement auf das zweite Bauelement zu übertragen, wobei das erste Bauelement eine Welle oder eine Nabe oder ein Zahnrad ist, wobei das erste Bauelement wenigstens eine Nut (20) aufweist, in welche zumindest ein Bauteil der Verbindungseinheit eingreift, wobei die Verbindungseinheit zwei, drei, vier, fünf oder mehr einstückig ausgebildete Bauteile aufweist,
**dadurch gekennzeichnet, dass**
die Verbindungseinheit wenigstens zu 90 Masse-Prozentaus technischer Keramik besteht und die Verbindungseinheit das zweite Bauelement formschlüssig in Bezug auf eine Umfangsrichtung des ersten Bauelements an dem ersten Bauelement befestigt und das erste und das zweite Bauelement relativ zueinander in Längsrichtung des ersten Bauelements verschiebbar sind und wenigstens eines der Bauteile rollenförmig ist.

2. Baueinheit nach Anspruch 1, wobei das zweite Bau- element eine mechanische Kupplungshälfte, eine Welle oder eine Nabe oder ein Zahnrad ist.

3. Baueinheit nach einem der Ansprüche 1 oder 2, wobei die Verbindungseinheit zwei, drei, vier, fünf oder mehr einstückig ausgebildete Bauteile (16, 18) aufweist.

4. Baueinheit nach Anspruch 3, wobei die Bauteile baugleich sind und/oder vollständig aus Keramik bestehen.

5. Baueinheit nach Anspruch 3 oder Anspruch 4, wobei wenigstens eines der Bauteile kugelförmig oder würfelförmig ist.

6. Baueinheit nach einem der Ansprüche 3 bis 5, wobei wenigstens eines der Bauteile ein Wälzkörper ist, welcher zur Verwendung in einem Wälzlager geeignet ist.

7. Baueinheit nach einem der vorherigen Ansprüche, wobei sowohl das erste Bauelement wenigstens eine Nut (20), als auch das zweite Bauelement eine Nut (22) aufweist, in welche zumindest ein Bauteil der Verbindungseinheit eingreift, und/oder wobei die Möglichkeit der axialen Verschiebbarkeit, beziehungsweise der Aufnahme von Relativbewegungen in Längsrichtung gegeben ist.

8. Baueinheit nach einem der vorherigen Ansprüche, wobei das erste Bauelement eine Motorwelle oder eine Getriebewelle ist.

9. Elektrofahrzeug, insbesondere Elektroauto, mit einer Baueinheit nach einem der vorherigen Ansprüche.

## Claims

1. Structural unit having a first structural element (10), having a second structural element (12) and having a connecting unit (14) which is intended for transmitting torque from the first structural element to the second structural element during an operating process, wherein the first structural element is a shaft or a hub or a gearwheel, wherein the first structural element has at least one groove (20) into which at least a component of the connecting unit engages, wherein the connecting unit has two, three, four, five or more integrally formed components,
**characterized in that**
the connecting unit consists of at least 90 percent technical ceramic by mass, and the connecting unit fastens the second structural element to the first structural element in a form-fitting manner in relation to a circumferential direction of the first structural element, and the first and second structural elements are displaceable relative to one another in a longitudinal direction of the first structural element, and at least one of the components is of roller-like form.

2. Structural unit according to Claim 1, wherein the second structural element is a mechanical clutch half, a shaft or a hub or a gearwheel.

3. Structural unit according to either of Claims 1 and 2, wherein the connecting unit has two, three, four, five or more integrally formed components (16, 18).

4. Structural unit according to Claim 3, wherein the components are structurally identical and/or consist entirely of ceramic.

5. Structural unit according to Claim 3 or Claim 4, wherein at least one of the components is of ballshaped form or cube-shaped form.

6. Structural unit according to one of Claims 3 to 5, wherein at least one of the components is a rolling body which is suitable for use in a rolling bearing.

7. Structural unit according to one of the preceding claims, wherein both the first structural element has at least one groove (20) and the second structural element has a groove (22) into which at least a component of the connecting unit engages, and/or wherein the possibility of axial displacement or the accommodation of relative movements in the longitudinal direction is provided.

8. Structural unit according to one of the preceding claims, wherein the first structural element is a motor shaft or a transmission shaft.

9. Electric vehicle, in particular an electric automobile, having a structural unit according to one of the preceding claims.

## Revendications

1. Composant comprenant un premier élément de composant (10), un deuxième élément de composant (12) et une unité de liaison (14) qui est prévue pour transmettre un couple du premier élément de composant au deuxième élément de composant lors d'un fonctionnement, le premier élément de composant étant un arbre ou un moyeu ou une roue dentée, le premier élément de composant présentant au moins une rainure (20) dans laquelle s'engage au moins un composant de l'unité de liaison, l'unité de liaison présentant deux, trois, quatre, cinq composants ou plus formés d'un seul tenant,
**caractérisé en ce que**
l'unité de liaison est composée d'au moins 90 % en masse de céramique technique et l'unité de liaison fixe le deuxième élément de composant au premier élément de composant par ajustement de formes par rapport à une direction circonférentielle du premier élément de composant, et le premier et le deuxième élément de composant sont aptes à être déplacés l'un par rapport à l'autre dans la direction longitudinale du premier élément de composant, et au moins un des composants est en forme de rouleau.

2. Composant selon la revendication 1, dans laquelle le deuxième élément de composant est un demi-accouplement mécanique, un arbre ou un moyeu ou une roue dentée.

3. Composant selon l'une des revendications 1 ou 2, dans laquelle l'unité de liaison comprend deux, trois, quatre, cinq, ou plus, composants (16, 18) formés d'un seul tenant.

4. Composant selon la revendication 3, dans laquelle les composants sont de construction identique et/ou sont entièrement en céramique.

5. Composant selon la revendication 3 ou la revendication 4, dans laquelle au moins un des composants est de forme sphérique ou cubique.

6. Ensemble selon l'une des revendications 3 à 5, dans lequel au moins l'un des composants est un élément de roulement adapté à une utilisation dans un palier à roulement.

7. Composant selon l'une des revendications précédentes, dans lequel à la fois le premier élément de composant présente au moins une rainure (20) et le deuxième élément de composant présente une rainure (22) dans laquelle s'engage au moins un composant de l'unité de liaison, et/ou dans lequel il est donné une possibilité de déplacement axial ou d'absorption de mouvements relatifs dans la direction longitudinale.

8. Composant selon l'une des revendications précédentes, dans laquelle le premier composant est un arbre moteur ou un arbre de transmission.

9. Véhicule électrique, en particulier voiture électrique, avec un composant selon l'une des revendications p
récédentes.
